# EUROPÄISCHE PATENTSCHRIFT

(11) **EP 1 695 454 B1**
(45) Veröffentlichungstag und Bekanntmachung des Hinweises auf die Patenterteilung: **18.07.2012**
(21) Anmeldenummer: 04803466.4
(22) Anmeldetag: 02.12.2004
(51) Int. Cl.: H04B 5/00

(54) **ELEKTRONISCHES GERÄT MIT EINEM SICHERHEITSMODUL**
ELECTRONIC DEVICE PROVIDED WITH A SECURITY MODULE
APPAREIL ELECTRONIQUE POURVU D'UN MODULE DE SECURITE

(30) Priorität: 04.12.2003 DE 10356676
(43) Veröffentlichungstag der Anmeldung: 30.08.2006
(73) Patentinhaber: Giesecke & Devrient GmbH, 81677 München (DE)
(72) Erfinder: FINKENZELLER, Klaus, 85774 Unterföhring (DE)
(86) Internationale Anmeldenummer: PCT/EP2004/013731
(87) Internationale Veröffentlichungsnummer: WO 2005/055459

(56) Entgegenhaltungen:
- WO-A-03/009534
- GB-A- 2 356 274
- US-A1- 2002 183 094
- PATENT ABSTRACTS OF JAPAN Bd. 2000, Nr. 25, 12. April 2001 (2001-04-12) & JP 2001 223631 A (KYOCERA DDI MIRAI TSUSHIN KENKYUSHO:KK; KDDI CORP; KYOCERA CORP), 17. August 2001 (2001-08-17)
- PATENT ABSTRACTS OF JAPAN Bd. 2003, Nr. 02, 5. Februar 2003 (2003-02-05) & JP 2002 298169 A (SONY CORP), 11. Oktober 2002 (2002-10-11)

## Beschreibung

Die Erfindung betrifft ein elektronisches Gerät mit einem als eine entnehmbare Einheit ausgebildeten Sicherheitsmodul. Weiterhin betrifft die Erfindung ein als eine entnehmbare Einheit ausgebildetes Sicherheitsmodul für ein elektronisches Gerät.

Bei einer Reihe von elektronischen Geräten ist zu deren Betrieb ein Sicherheitsmodul erforderlich. So sind zum Beispiel Mobilfunktelefone üblicherweise mit einem Sicherheitsmodul ausgestattet, das in einen dafür vorgesehenen Steckplatz des Mobilfunktelefons eingesteckt ist. Das Sicherheitsmodul wird benötigt, um den Nachweis für eine Zugangsberechtigung zum Mobilfunknetz zu erbringen. Neben der Fernübertragung über das Mobilfunknetz besteht bei einer entsprechenden Ausstattung des Mobilfunktelefons auch die Möglichkeit, eine kontaktlose Datenübertragung im Nahbereich durchzuführen. Die kontaktlose Datenübertragung im Nahbereich wird auch als Near Field Communication oder kurz NFC bezeichnet. Die typische Reichweite eines NFC-Geräts liegt in der Größenordnung von etwa 20 cm. Die Übertragung kann mittels magnetischer Felder im Frequenzbereich 13,56 MHz erfolgen. Die dabei eingesetzten Verfahren sind den beim Betrieb von kontaktlosen Chipkarten verwendeten Verfahren sehr ähnlich, so dass NFC-Geräte in der Lage sind, mit kontaktlosen Chipkarten zu kommunizieren oder kontaktlose Chipkarten zu simulieren.

Um ein Mobilfunktelefon für eine kontaktlose Datenübertragung im Nahbereich nutzbar zu machen, könnte dessen Sicherheitsmodul mit einem NFC-Baustein ausgestattet werden. Wegen der kleinen Abmessungen des Sicherheitsmoduls, das üblicherweise als Chipkarte im ID-000 Format ausgebildet ist, steht auf dem Sicherheitsmodul allerdings relativ wenig Platz für eine Antenne, die für den Betrieb des NFC-Bausteins benötigt wird, zur Verfügung. Dies hat eine erhebliche Einschränkung der erzielbaren Reichweite zur Folge.

Aus der JP 2001223631 A ist ein mobiles Endgerät mit einem Datenträger bekannt, wobei das Endgerät eine Kontaktlosschnittstelle aufweist.

Die GB 2 356 274 A beschreibt ein mobiles Endgerät mit Kontaktlosschnittstelle sowie einer Aufnahme für eine Chipkarte. Es wird eine Kommunikation des Endgeräts mit der Chipkarte über die Kontaktlosschnittstelle beschrieben, die zusätzlich zur Kommunikation über das Mobilfunknetz möglich ist.

Der Erfindung liegt die Aufgabe zugrunde, ein elektronisches Gerät mit einem Sicherheitsmodul so auszubilden, dass eine kontaktlose Datenübertragung im Nahbereich möglichst optimal durchgeführt werden kann ohne die Belegung einer Kontaktfläche des Sicherheitsmoduls.

Diese Aufgabe wird durch ein elektronisches Gerät mit der Merkmalskombination des Anspruchs 1 gelöst.

Weitere Vorteile und Ausgestaltungen der Erfindung ergeben sich aus den Unteransprüchen.

Bei vielen Anwendungen ist nur eine oder gar keine unbelegte Kontaktfläche des Sicherheitsmoduls verfügbar, die für den Anschluss der ersten Antenne an die Einrichtung zur kontaktlosen Datenübertragung genutzt werden könnte. Im Rahmen der Erfindung wird daher eine Variante für die Ausbildung eines Signalpfads zur Übertragung eines Antennensignals zwischen der Einrichtung zur kontaktlosen Datenübertragung und der ersten Antenne vorgeschlagen.

Eine weitere Variante zeichnet sich beispielsweise dadurch aus, dass der Signalpfad über wenigstens eine Kontaktfläche ausgebildet ist, die für ein anderes Signal, vorzugsweise für die Versorgungsspannung des Sicherheitsmoduls, reserviert ist. Dies hat den Vorteil, dass eine oder mehrere bereits belegte Kontaktflächen zusätzlich für den Anschluss der ersten Antenne genutzt werden können. Zu diesem Zweck kann an die Kontaktfläche eine Weichenanordnung zum Zusammenführen und zum Auftrennen des Antennensignals und des anderen Signals, für das die Kontaktfläche reserviert ist, angeschlossen sein. Dabei kann die Weichenanordnung so ausgebildet sein, dass sie eine frequenzselektive Signaltrennung durchführt. Angesichts der zum Teil sehr unterschiedlichen Frequenzen des Antennensignals und der sonstigen über die Kontaktflächen übermittelten Signale ist eine frequenzselektive Signaltrennung mit einem relativ geringen Aufwand durchführbar. Die Weichenanordnung kann beispielsweise so ausgebildet sein, dass sie wenigstens eine erste Weiche aufweist, die auf dem Sicherheitsmodul angeordnet ist und wenigstens eine zweite Weiche, die außerhalb des Sicherheitsmoduls im Gerät angeordnet ist.

Eine weitere Variante, die auch mit der vorstehend beschriebenen Mehrfachnutzung der Kontaktflächen kombiniert werden kann, besteht darin, dass wenigstens eine Wandlereinrichtung für das Antennensignal mit zwei symmetrischen Ein-/ Ausgängen und einem dazu korrespondierenden asymmetrischen Ein-/ Ausgang vorgesehen ist. Dies hat den Vorteil, dass das Antennensignal über eine einzige Leitung übertragen werden kann und somit für den Anschluss der ersten Antenne nur eine Kontaktfläche benötigt wird, wenn im Sicherheitsmodul und im Gerät ein gemeinsames Massepotential verfügbar ist. An den asymmetrischen Ein-/Ausgang der Wandlereinrichtung kann beispielsweise die Weichenanordnung angeschlossen sein. Weiterhin kann die Einrichtung zur kontaktlosen Datenübertragung an die symmetrischen Ein-/ Ausgänge einer auf dem Sicherheitsmodul angeordneten Wandlereinrichtung und/ oder die erste Antenne an die symmetrischen Ein-/ Ausgänge einer außerhalb des Sicherheitsmoduls im Gerät angeordneten Wandlereinrichtung angeschlossen sein.

Bei den vorstehend beschriebenen Varianten wurde für den Anschluss der ersten Antenne jeweils wenigstens eine Kontaktfläche verwendet. Es besteht jedoch auch die erfindungsgemäße Möglichkeit, ohne Rückgriff auf die Kontaktflächen eine Signalverbindung zwischen der Einrichtung zur kontaktlosen Datenübertragung und der ersten Antenne auszubilden, so dass die Belegung der Kontaktflächen diesbezüglich vollständig ignoriert werden kann. Hierzu kann eine zweite Antenne außerhalb des Sicherheitsmoduls im Gerät angeordnet sein, die mit der ersten Antenne galvanisch verbunden sein kann. Bei einem konkreten Ausführungsbeispiel für die Umgehung der Kontaktflächen sind die erste Antenne und die zweite Antenne als Nachrüstteil in das Gerät eingebaut. Dies hat den Vorteil, dass bereits vorhandene Geräte nachgerüstet werden können und eine Neuanschaffung somit nicht zwingend erforderlich ist. Insbesondere können die erste Antenne und die zweite Antenne auf einem flexiblen Träger angeordnet sein. Dabei können die erste Antenne und die zweite Antenne beispielsweise in einem Batteriefach des Geräts angeordnet sein, so dass eine Nachrüstung des Geräts sehr einfach durchführbar ist. Dabei können die erste und die zweite Antenne unmittelbar auf der Batterie angeordnet sein.

Bei einem weiteren Ausführungsbeispiel für die Umgehung der Kontaktflächen sind die erste Antenne und die zweite Antenne fest in das Gerät eingebaut. Dabei kann die zweite Antenne auf einer Leiterplatte des Geräts ausgebildet sein oder in einen Sockel zur Aufnahme des Sicherheitsmoduls integriert sein. Die erste Antenne kann jeweils in das Gehäuse des Geräts integriert sein.

Bei beiden vorstehend aufgeführten Ausführungsbeispielen für die Umgehung der Kontaktflächen kann eine dritte Antenne auf dem Sicherheitsmodul angeordnet sein. Über die Kopplung der zweiten und der dritten Antenne ist ein Signalpfad zwischen der Einrichtung zur kontaktlosen Datenübertragung und der ersten Antenne ausgebildet. Dabei ist es im Sinne einer möglichst guten Kopplung von Vorteil, wenn die zweite Antenne und die dritte Antenne einander wenigstens bereichsweise überdecken. Außerdem sollten die Abmessungen der zweiten Antenne und der dritten Antenne aufeinander abgestimmt sein.

Das Sicherheitsmodul ist jeweils vorzugsweise als eine Chipkarte ausgebildet. Damit lässt sich für die meisten Anwendungsfälle ein günstiges Verhältnis zwischen Herstellungskosten und Leistungsfähigkeit erzielen. Das erfindungsgemäße Gerät kann beispielsweise als ein Mobilfunktelefon ausgebildet sein, das zusätzlich zur ersten Antenne eine Mobilfunkantenne aufweist.

Die Erfindung wird nachstehend anhand der in der Zeichnung dargestellten Ausführungsbeispiele erläutert, bei denen das elektronische Gerät jeweils als ein Mobilfunktelefon ausgebildet ist.

Es zeigen:
- Fig.1: ein stark vereinfachtes Blockschaltbild für ein Ausführungsbeispiel eines erfindungsgemäß ausgebildeten Mobilfunktelefons,
- Fig. 2: ein Ausführungsbeispiel für eine Anordnung zur induktiven Kopplung der externen Antenne mit dem NFC-Baustein in einer schematisierten Aufsicht,
- Fig. 3: die Anordnung aus Fig. 2 im eingebauten Zustand in perspektivischer Darstellung,
- Fig. 4: ein stark vereinfachtes Blockschaltbild zur Veranschaulichung einer weiteren Möglichkeit, eine Verbindung zwischen der externen Antenne und dem NFC-Baustein herzustellen und
- Fig. 5: ein Beispiel einer Wandlerschaltung, mit deren Hilfe die externe Antenne über eine einzige Hochfrequenzleitung mit dem NFC-Baustein verbunden werden kann.

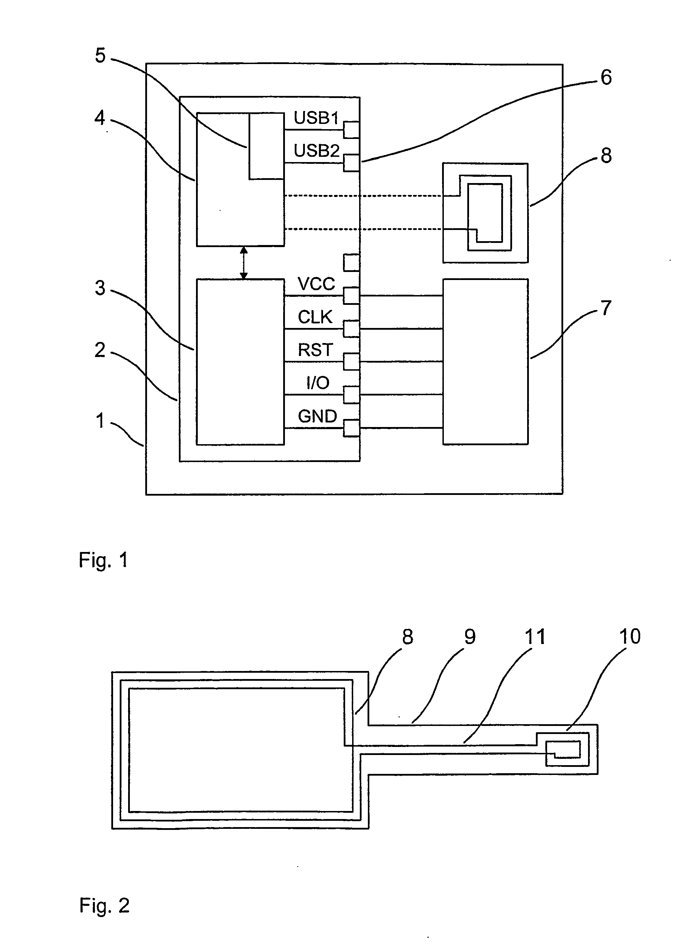

Fig.1 zeigt ein stark vereinfachtes Blockschaltbild für ein Ausführungsbeispiel eines erfindungsgemäß ausgebildeten Mobilfunktelefons 1. Dargestellt sind lediglich einige wenige Komponenten des Mobilfunktelefons 1, die im Zusammenhang mit der Erfindung von besonderer Bedeutung sind. Das Mobilfunktelefon 1 weist ein Sicherheitsmodul 2 auf, das als eine Chipkarte im Format ID-000 ausgebildet ist und in das Mobilfunktelefon 1 eingesteckt ist. Das Sicherheitsmodul 2 verfügt über einen üblichen Identifikationsbaustein 3, der beispielsweise für den Nachweis einer Zugangsberechtigung zum Mobilfunksystem benötigt wird. Weiterhin weist das Sicherheitsmodul 2 einen NFC-Baustein 4 zur Durchführung einer kontaktlosen Nahfeld-Kommunikation auf, die auch als Near Field Communication oder kurz NFC bezeichnet wird. Die Nahfeld-Kommunikation kann unabhängig von der Kommunikation über das Mobilfunknetz durchgeführt werden und nutzt das Mobilfunknetz nicht als Übertragungssystem. Ein weiterer Kommunikationspfad wird dem NFC-Baustein 4 durch eine USB-Schnittstelle 5 eröffnet, die eine sehr hohe Datenübertragungsgeschwindigkeit ermöglicht. Ferner kann der NFC-Baustein 4 auch mit dem Identifikationsbaustein 3 verbunden sein oder zusammen mit diesem in einem integrierten Schaltkreis realisiert sein.

Zur Ausbildung diverser galvanischer Verbindungen mit dem Mobilfunktelefon 1 verfügt das Sicherheitsmodul 2 über acht Kontaktflächen 6. Fünf dieser Kontaktflächen 6 sind gemäß ISO/ IEC-7816 für den Anschluss des Identifikationsbausteins 3 an einen Kartenleser 7 des Mobilfunktelefons 1 reserviert. Dabei ist eine Kontaktfläche 6 zum Anlegen einer Versorgungsspannung VCC vorgesehen. Weitere Kontaktflächen 6 dienen als Masseanschluss GND oder sind zum Anlegen eines Taktsignals CLK, für die Datenübertragung I/O oder zur Übermittlung eines Reset-Signals RST vorgesehen. Zwei der drei verbleibenden Kontaktflächen 6 sind mit der USB-Schnittstelle 5 des NFC-Bausteins 4 verbunden. Die Art der Weiterführung dieser Verbindungen seitens des Mobilfunktelefons 1 ist für die Erfindung nicht von Bedeutung und in Fig.1 daher nicht dargestellt. Die letzte Kontaktfläche 6 ist bei dem in Fig.1 dargestellten Ausführungsbeispiel nicht belegt. Diese Kontaktfläche 6 kann beispielsweise für eine synchrone Datenübertragung vorgesehen werden und ist somit je nach Anwendungsfall potentiell ebenfalls belegt.

Für den Betrieb des NFC-Bausteins 4 ist eine außerhalb des Sicherheitsmoduls 2 angeordnete externe Antenne 8 vorgesehen. Bei der externen Antenne 8 handelt es sich nicht um eine Mobilfunkantenne, über die das Mobilfunktelefon 1 mit dem Mobilfunknetz kommuniziert, sondern um eine eigens für die Nahfeld-Kommunikation vorgesehene Komponente. Über die externe Antenne 8 sendet und empfängt der NFC-Baustein 4 Daten. Hierzu ist eine Verbindung zwischen dem NFC-Baustein 4 und der externen Antenne 8 erforderlich. Die externe Antenne 8 ist als eine Spule ausgeführt und verfügt über zwei Spulenenden, die mit dem NFC-Baustein 4 zu verbinden sind. Die beiden benötigten Verbindungen sind in Fig.1 symbolisch durch zwei gestrichelte Linien dargestellt. Dabei ist zunächst offen gelassen, wie die Verbindungen tatsächlich ausgebildet sind. Beim dargestellten Beispiel steht hierfür lediglich eine freie Kontaktfläche 6 zur Verfügung. Ebenso kann es auch vorkommen, dass alle Kontaktflächen 6 belegt sind. Anhand der Fig. 2,3,4 und 5 wird im Folgenden näher erläutert, wie trotz des Mangels an freien Kontaktflächen 6 eine Verbindung zur externen Antenne 8 ausgebildet werden kann.

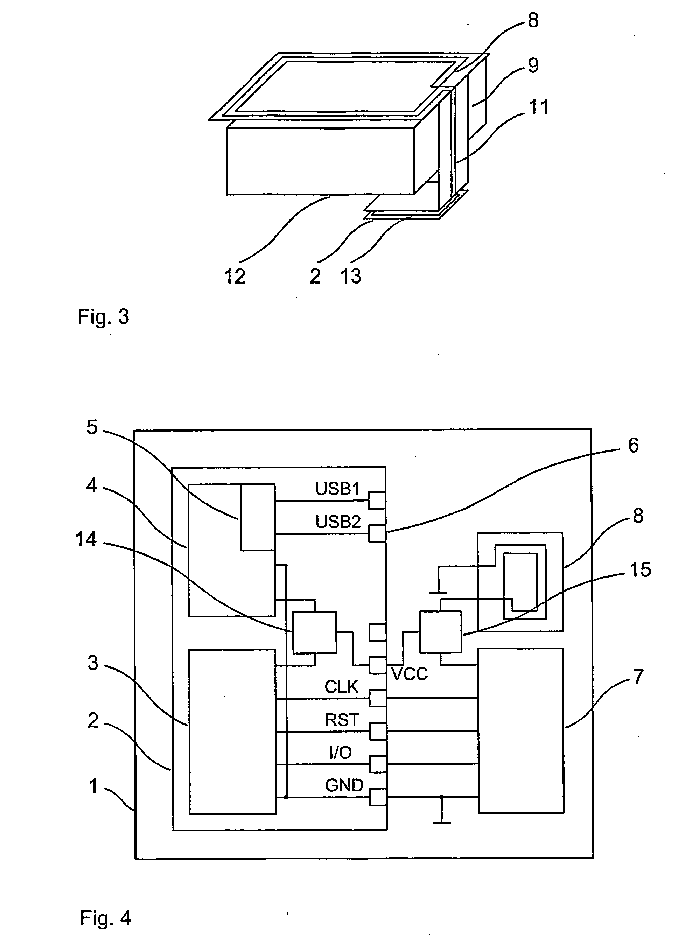

Fig. 2 zeigt ein Ausführungsbeispiel für eine Anordnung zur induktiven Kopplung der externen Antenne 8 mit dem NFC-Baustein 4 in einer schematisierten Aufsicht. Die externe Antenne 8 ist auf einem bahnförmigen, flexiblen Träger 9 angeordnet. Weiterhin ist auf dem Träger 9 eine Hilfsantenne 10 angeordnet, die wesentlich kleiner als die externe Antenne 8 ist und über Verbindungsleitungen 11 mit der externen Antenne 8 galvanisch verbunden ist. Die Hilfsantenne 10 dient dazu, die externe Antenne 8 induktiv an den NFC-Baustein 4 anzukoppeln. Dies wird im Einzelnen anhand von Fig. 3 erläutert.

Fig. 3 zeigt die Anordnung aus Fig. 2 im eingebauten Zustand in perspektivischer Darstellung. Im Gegensatz zu Fig. 2 ist der Träger 9 nicht eben ausgebreitet, sondern um eine Batterie 12 des Mobilfunktelefons 1 herumgelegt. Dies ermöglicht den nachträglichen Einbau des Trägers 9 in ein figürlich nicht dargestelltes Batteriefach des Mobilfunktelefons 1. Dabei ist es für einen störungsfreien Betrieb des NFC-Bausteins 4 wichtig, dass die Hilfsantenne 10, die sich in der Darstellung der Fig. 3 auf der Unterseite des Trägers 9 befindet und daher nicht sichtbar ist, in unmittelbarer Nachbarschaft zum Sicherheitsmodul 2 angeordnet wird, da die mit der Hilfsantenne 10 erzielbare Reichweite sehr gering ist. Das Sicherheitsmodul 2 weist eine Modulantenne 13 auf, deren Abmessungen mit den Abmessungen der Hilfsantenne 10 weitgehend identisch sind und die weitgehend mit der Hilfsantenne 10 überlappt, so dass sich eine gute Kopplung zwischen der Hilfsantenne 10 und der Modulantenne 13 einstellt. Selbstverständlich ist es auch denkbar, die Batterie 12 unmittelbar mit Antennen 8 und 10 zu versehen, so dass kein Träger 9 mehr erforderlich ist.

Beim Einsatz der in den Fig. 2 und 3 dargestellten Anordnung wird keine der Kontaktflächen 6 für die Herstellung einer Verbindung zwischen der externen Antenne 8 und dem NFC-Baustein 4 benötigt, da die externe Antenne 8 über die induktive Kopplung der Hilfsantenne 10 und der Modulantenne 13 mit dem NFC-Baustein 4 verbunden ist. Um diese Verbindung zuverlässig aufrecht zu erhalten, ist bei einer Ausgestaltung der Erfindung vorgesehen, wenigstens eine Seite des Trägers 9 wenigstens teilweise mit einem Klebstoff zu beschichten so dass der Träger 9 in das Mobilfunktelefon 1 eingeklebt und dadurch mechanisch fixiert werden kann.

Die in den Fig. 2 und 3 dargestellte Anordnung kann auch in Zusammenhang mit einem anders als in Fig. 1 ausgebildeten Sicherheitsmodul 2 eingesetzt werden. Beispielsweise kann der NFC-Baustein 4 durch ein beliebiges kontaktloses Lesegerät ersetzt werden. Ebenso kann auch ein Dual-Interface-Chip vorhanden sein, der sowohl für eine kontaktbehaftete als auch für eine kontaktlose Datenübertragung vorgesehen ist und in den der Identifikationsbaustein 3 integriert ist. Dies gilt jeweils auch für die im Folgenden beschriebenen Ausführungsbeispiele.

Bei einer Abwandlung des in den Fig. 2 und 3 dargestellten Ausführungsbeispiels wird die Hilfsantenne 10 auf einer Leiterplatte des Mobilfunktelefons 1 angeordnet. Insbesondere wird hierfür eine Fläche unmittelbar unter einem Sockel, in den das Sicherheitsmodul 2 eingesteckt ist, ausgewählt, da dort ohnehin keine anderen Bauteile angeordnet werden können. Außerdem ist durch die unmittelbare Nähe zum Sicherheitsmodul 2 eine sehr gute Kopplung zwischen der Hilfsantenne 10 und der auf dem Sicherheitsmodul 2 angeordneten Modulantenne 13 vorhanden. Die externe Antenne 8 wird möglichst großflächig in das Gehäuse des Mobilfunktelefons 1 integriert. Dies ist z. B. in Form einer eingegossenen Drahtspule oder einer auf der Gehäuseinnenwand mittels leitfähiger Farbe aufgedruckten Leiterbahn möglich. Analog zum Ausführungsbeispiel der Fig. 2 und 3 wird eine galvanische Verbindung zwischen der externen Antenne 8 und der Hilfsantenne 10 hergestellt, so dass die externe Antenne 8 wiederum über die Hilfsantenne 10 und die Modulantenne 13 mit dem NFC-Baustein 4 des Sicherheitsmoduls 2 verbunden ist.

Fig. 4 zeigt ein stark vereinfachtes Blockschaltbild zur Veranschaulichung einer weiteren Möglichkeit, eine Verbindung zwischen der externen Antenne 8 und dem NFC-Baustein 4 herzustellen. In diesem Fall wird die Verbindung nicht über die Hilfsantenne 10 und die Modulantenne 13 hergestellt, so dass neben der externen Antenne 8 keine weiteren Antennen vorgesehen sind. Das Grundprinzip des dargestellten Beispiels besteht darin, dieselbe Kontaktfläche 6 für die Übertragung mehrerer Signale zu nutzen. Hierzu sind beim Sicherheitsmodul 2 eine erste Frequenzweiche 14 und beim Mobilfunktelefon 1 eine zweite Frequenzweiche 15 vorgesehen, die über eine der Kontaktflächen 6 miteinander verbunden sind. Die erste Frequenzweiche 14 ist weiterhin mit dem NFC-Baustein 4 und mit dem Identifikationsbaustein 3 verbunden. An die zweite Frequenzweiche 15 sind der Kartenleser 7 und ein Anschluss der externen Antenne 8 angeschlossen. Bei einer symmetrischen Anschaltung der externen Antenne 8 ist noch ein zweiter Anschluss der externen Antenne 8 mit dem NFC-Baustein 4 zu verbinden. Dies ist durch eine gestrichelte Linie angedeutet. Die der gestrichelten Linie entsprechende Verbindung könnte als eine galvanische Verbindung über die freie Kontaktfläche 6 hergestellt werden. Falls keine freie Kontaktfläche 6 vorhanden ist, können je eine weitere erste Frequenzweiche 14 und eine weitere zweite Frequenzweiche 15 vorgesehen werden. Bei einer asymmetrischen Anschaltung der externen Antenne 8 kommt eine andere Möglichkeit in Betracht. In diesem Fall kann der zweite Anschluss der externen Antenne 8 ohne Zwischenschaltung einer zweiten Frequenzweiche 15 mit der Kontaktfläche 6 verbunden werden, die als Masseanschluss (GND) dient.

Im Einzelnen ergibt sich für das in Fig. 4 dargestellte Beispiel folgendes Funktionsschema:

Für eine Signalübermittlung vom Sicherheitsmodul 2 zur externen Antenne 8 führt die erste Frequenzweiche 14 ein vom Identifikationsbaustein 3 und ein vom NFC-Baustein 4 empfangenes Signal zusammen, so dass beide Signale über dieselbe Kontaktfläche 6 an die zweite Frequenzweiche 15 weitergeleitet werden können. Dabei hängt es von der gewählten Kontaktfläche 6 ab, ob der Identifikationsbaustein 3 tatsächlich ein Signal beisteuert. Da der NFC-Baustein 4 mit Signalen im Bereich von 13,56 MHz und der Identifikationsbaustein 3 mit Signalen von Gleichspannung bis etwas über 1 MHz arbeiten, weisen die beiden zusammengeführten Signale unterschiedliche Frequenzen auf. Die zweite Frequenzweiche 15 trennt die beiden Signale auf Basis ihrer unterschiedlichen Frequenzen auf und leitet sie getrennt an die externe Antenne 8 bzw. an den Kartenleser 7 weiter. Umgekehrt führt die zweite Frequenzweiche 15 für eine Signalübermittlung von der externen Antenne 8 zum NFC-Baustein 4 ein von der externen Antenne 8 und ein vom Kartenleser 7 empfangenes Signal zusammen und übermittelt die beiden zusammengeführten Signale über dieselbe Kontaktfläche 6 zur ersten Frequenzweiche 14. Die erste Frequenzweiche 14 trennt die beiden Signale auf Basis ihrer Frequenz auf und leitet sie dem NFC-Baustein 4 bzw. dem Identifikationsbaustein 3 zu. Um die erste Frequenzweiche 14 und die zweite Frequenzweiche 15 möglichst einfach ausbilden zu können, wird die Signalübertragung vorzugsweise über die Kontaktfläche 6 abgewickelt, an der die Versorgungsspannung VCC des Sicherheitsmoduls 2 anliegt. Bei der Versorgungsspannung VCC handelt es sich um ein Gleichspannungssignal, dass mit sehr geringem Aufwand mit dem Hochfrequenzsignal der externen Antenne 8 zusammengeführt und von diesem wieder getrennt werden kann. Prinzipiell können die erste Frequenzweiche 14 und die zweite Frequenzweiche 15 auch an eine andere Kontaktfläche 6 angeschlossen werden, wobei sich der Filteraufwand allerdings deutlich erhöhen kann. Dabei kommen sowohl die Kontaktflächen 6 in Frage, die mit dem Identifikationsbaustein 3 verbunden sind als auch die von der USB-Schnittstelle 5 des NFC-Bausteins 4 verwendeten Kontaktflächen 6.

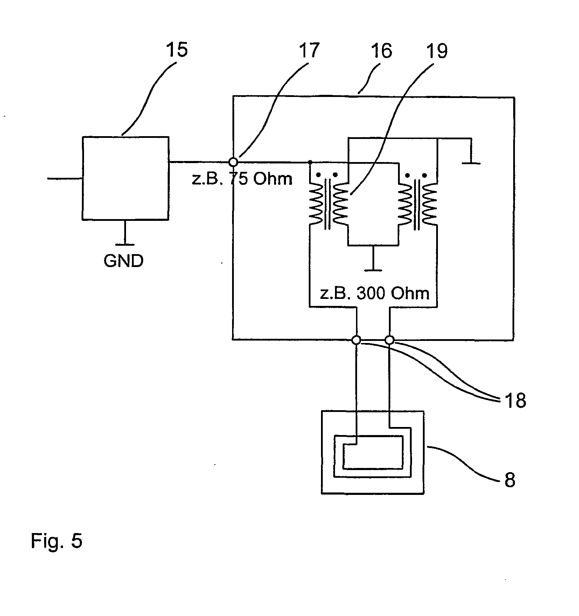

Fig. 5 zeigt ein Beispiel einer Wandlerschaltung 16, mit deren Hilfe die externe Antenne 8 über eine einzige Hochfrequenzleitung mit dem NFC-Baustein 4 verbunden werden kann. Wie aus Fig. 5 ersichtlich, kann die Wandlerschaltung 16 an die zweite Frequenzweiche 15 angeschlossen werden, so dass für die Verbindung der externen Antenne 8 mit dem NFC-Baustein 4 keine freie Kontaktfläche 6 erforderlich ist. Für den Anschluss der zweiten Frequenzweiche 15 ist ein asymmetrischer Ein-/ Ausgang 17 der Wandlerschaltung 16 mit einer Impedanz von z.B. 75 Ohm vorgesehen. Die zweite Frequenzweiche 15 wird entsprechend Fig. 4 mit dem Kartenleser 7 und der ausgewählten Kontaktfläche 6 verbunden. Wegen des asymmetrischen Antennensignals ist zudem ein Masseanschluss der zweiten Frequenzweiche 15 erforderlich. An zwei symmetrische Ein-/Ausgänge 18 der Wandlerschaltung 16, die eine Impedanz von z.B. 300 Ohm aufweisen, sind die beiden Enden der als Spule ausgebildeten externen Antenne 8 angeschlossen. In analoger Weise kann der symmetrisch gespeiste NFC-Baustein 4 über eine weitere Wandlerschaltung 16 an die erste Frequenzweiche 14 angeschlossen werden, d. h. der NFC-Baustein 4 kann mit den symmetrischen Ein-/ Ausgängen 18 und die erste Frequenzweiche 14 mit dem asymmetrischen Ein-/Ausgang 17 der weiteren Wandlerschaltung 16 verbunden werden. Der interne Aufbau der Wandlerschaltung 16 ist für sich bekannt ("BALUN", balanced-unbalanced) und kann beispielsweise mehrere Induktivitäten 19 umfassen, die in der in Fig. 5 dargestellten Weise miteinander verschaltet sind.

Alternativ zu dem in Fig. 5 dargestellten Beispiel kann der asymmetrische Ein-/ Ausgang 17 der Wandlerschaltung 16 auch direkt mit einer freien Kontaktfläche 6 verbunden werden. Folglich kann durch den Einsatz zweier Wandlerschaltungen 16 auf die beiden Frequenzweichen 14 und 15 verzichtet werden, wenn eine freie Kontaktfläche 6 verfügbar ist.

## Patentansprüche

1. Elektronisches Gerät mit einem als eine entnehmbare Einheit ausgebildeten Sicherheitsmodul (2), das über standardisierte Kontaktflächen (6) mit dem Gerät (1) galvanisch verbunden ist und eine Einrichtung (4) zur kontaktlosen Datenübertragung über eine erste Antenne (8) aufweist, **dadurch gekennzeichnet, dass** die erste Antenne (8) und dass eine zweite Antenne (10) außerhalb des Sicherheitsmoduls (2) im Gerät (1) angeordnet sind, wobei die erste Antenne (8) mit der zweiten Antenne (10) galvanisch verbunden und mithilfe der zweiten Antenne (10) induktiv an die Einrichtung (4) zur kontaktlosen Datenübertragung gekoppelt ist.

2. Gerät nach Anspruch 1, **dadurch gekennzeichnet, dass** die Einrichtung (4) zur kontaktlosen Datenübertragung für eine Datenübertragung im Nahbereich ausgebildet ist.

3. Gerät nach einem der Ansprüche 1 oder 2, **dadurch gekennzeichnet, dass** die erste Antenne (8) und die zweite Antenne (10) als Nachrüstteil in das Gerät (1) eingebaut sind.

4. Gerät nach einem der Ansprüche 1 bis 3, **dadurch gekennzeichnet, dass** die erste Antenne (8) und die zweite Antenne (10) auf einem flexiblen Träger (9) angeordnet sind.

5. Gerät nach einem der Ansprüche 1 bis 4, **dadurch gekennzeichnet, dass** die erste Antenne (8) und die zweite Antenne (10) in einem Batteriefach des Geräts (1) angeordnet sind.

6. Gerät nach einem der Ansprüche 1 bis 5 **dadurch gekennzeichnet, dass** die erste Antenne (8) und die zweite Antenne (10) auf einer Batterie angeordnet sind.

7. Gerät nach einem der Ansprüche 1 oder 2, **dadurch gekennzeichnet, dass** die erste Antenne (8) und die zweite Antenne (10) fest in das Gerät (1) eingebaut sind.

8. Gerät nach Anspruch 7, **dadurch gekennzeichnet, dass** die zweite Antenne (10) auf einer Leiterplatte des Geräts (1) ausgebildet ist.

9. Gerät nach Anspruch 7, **dadurch gekennzeichnet, dass** die zweite Antenne (10) in einen Sockel zur Aufnahme des Sicherheitsmoduls (2) integriert ist.

10. Gerät nach einem der Ansprüche 7 bis 9 **dadurch gekennzeichnet, dass** die erste Antenne (8) in das Gehäuse des Geräts (1) integriert ist.

11. Gerät nach einem der Ansprüche 1 bis 10, **dadurch gekennzeichnet, dass** eine dritte Antenne (13) auf dem Sicherheitsmodul (2) angeordnet ist.

12. Gerät nach Anspruch 11, **dadurch gekennzeichnet, dass** die zweite Antenne (10) und die dritte Antenne (13) einander wenigstens bereichsweise überdecken.

13. Gerät nach einem der Ansprüche 11 oder 13, **dadurch gekennzeichnet, dass** die Abmessungen der zweiten Antenne (10) und der dritten Antenne (13) aufeinander abgestimmt sind.

14. Gerät nach einem der vorhergehenden Ansprüche, **dadurch gekennzeichnet, dass** das Sicherheitsmodul (2) als eine Chipkarte ausgebildet ist.

15. Gerät nach einem der vorhergehenden Ansprüche, **dadurch gekennzeichnet, dass** das Gerät (1) als ein Mobilfunktelefon ausgebildet ist, das zusätzlich zur ersten Antenne (8) eine Mobilfunkantenne aufweist.

## Claims

1. An electronic device with a security module (2) configured as a removable unit, which is galvanically connected with the device (1) via standardized contact surfaces (6) and has a means (4) for contactless data transmission via a first antenna (8), **characterized in that** the first antenna (8) and **in that** a second antenna (10) are arranged outside the security module (2) in the device (1), whereby the first antenna (8) is galvanically connected with the second antenna (10) and, with the aid of the second antenna (10), is coupled inductively to the means (4) for contactless data transmission.

2. The device according to claim 1, **characterized in that** the means (4) for contactless data transmission is configured for a data transmission in the near zone.

3. The device according to any of the claims 1 or 2, **characterized in that** the first antenna (8) and the second antenna (10) are installed in the device (1) as subsequently fitted component.

4. The device according to any of the claims 1 to 3, **characterized in that** the first antenna (8) and the second antenna (10) are arranged on a flexible carrier (9).

5. The device according to any of the claims 1 to 4, **characterized in that** the first antenna (8) and the second antenna (10) are arranged in a battery compartment of the device (1).

6. The device according to any of the claims 1 to 5, **characterized in that** the first antenna (8) and the second antenna (10) are arranged on a battery.

7. The device according to any of the claims 1 or 2, **characterized in that** the first antenna (8) and the second antenna (10) are firmly installed in the device (1).

8. The device according to claim 7, **characterized in that** the second antenna (10) is configured on a circuit board of the device (1).

9. The device according to claim 7, **characterized in that** the second antenna (10) is integrated in a base for receiving the security module (2).

10. The device according to any of the claims 7 to 9, **characterized in that** the first antenna (8) is integrated in the housing of the device (1).

11. The device according to any of the claims 1 to 10, **characterized in that** a third antenna (13) is arranged on the security module (2).

12. The device according to claim 11, **characterized in that** the second antenna (10) and the third antenna (13) overlap each other at least in certain regions.

13. The device according to any of the claims 11 or 12, **characterized in that** the dimensions of the second antenna (10) and the third antenna (13) are coordinated with each other.

14. The device according to any of the preceding claims, **characterized in that** the security module (2) is configured as a chip card.

15. The device according to any of the preceding claims, **characterized in that** the device (1) is configured as a mobile telephone having a mobile telephony antenna in addition to the first antenna (8).

## Revendications

1. Appareil électronique comprenant un module de sécurité (2) réalisé sous forme d'une unité retirable qui est relié de façon galvanique à l'appareil (1) par l'intermédiaire de surfaces de contact (6) standardisées et qui comporte un dispositif (4) de transmission de données sans contact par l'intermédiaire d'une première antenne (8), **caractérisé en ce que** la première antenne (8) et qu'une deuxième antenne (10) sont agencées dans l'appareil (1) à l'extérieur du module de sécurité (2), la première antenne (8) étant reliée de façon galvanique à la deuxième antenne (10) et étant, à l'aide de la deuxième antenne (10), couplée inductivement au dispositif (4) de transmission de données sans contact.

2. Appareil selon la revendication 1, **caractérisé en ce que** le dispositif (4) de transmission de données sans contact est réalisé pour une transmission de données dans la zone d'induction.

3. Appareil selon une des revendications 1 ou 2, **caractérisé en ce que** la première antenne (8) et la deuxième antenne (10) sont encastrées dans l'appareil (1) en tant que pièce de post-montage.

4. Appareil selon une des revendications de 1 à 3, **caractérisé en ce que** la première antenne (8) et la deuxième antenne (10) sont agencées sur un support (9) flexible.

5. Appareil selon une des revendications de 1 à 4, **caractérisé en ce que** la première antenne (8) et la deuxième antenne (10) sont agencées dans un compartiment pour pile de l'appareil (1).

6. Appareil selon une des revendications de 1 à 5, **caractérisé en ce que** la première antenne (8) et la deuxième antenne (10) sont agencées sur une pile.

7. Appareil selon une des revendications 1 ou 2, **caractérisé en ce que** la première antenne (8) et la deuxième antenne (10) sont encastrées à demeure dans l'appareil (1).

8. Appareil selon la revendication 7, **caractérisé en ce que** la deuxième antenne (10) est réalisée sur une carte imprimée de l'appareil (1).

9. Appareil selon la revendication 7, **caractérisé en ce que** la deuxième antenne (10) est intégrée dans un socle destiné au logement du module de sécurité (2).

10. Appareil selon une des revendications de 7 à 9, **caractérisé en ce que** la première antenne (8) est intégrée dans le boîtier de l'appareil (1).

11. Appareil selon une des revendications de 1 à 10, **caractérisé en ce qu'**une troisième antenne (13) est agencée sur le module de sécurité (2).

12. Appareil selon la revendication 11, **caractérisé en ce que** la deuxième antenne (10) et la troisième antenne (13) se chevauchent mutuellement au moins partiellement.

13. Appareil selon une des revendications 11 ou 12, **caractérisé en ce que** les dimensions de la deuxième antenne (10) et de la troisième antenne (13) sont accordées les unes aux autres.

14. Appareil selon une des revendications précédentes, **caractérisé en ce que** le module de sécurité (2) est réalisé sous forme d'une carte à puce.

15. Appareil selon une des revendications précédentes, **caractérisé en ce que** l'appareil (1) est réalisé sous forme d'un radiotéléphone mobile qui comporte en plus de la première antenne (8) une antenne de radiocommunication mobile.
